# EUROPÄISCHE PATENTANMELDUNG

(11) **EP 1 072 868 A1**
(43) Veröffentlichungstag der Anmeldung: **31.01.2001**
(21) Anmeldenummer: 99113307.5
(22) Anmeldetag: 09.07.1999
(51) Int. Cl.: G01F 11/00, F04B 43/00

(54) **Dosiervorrichtung für Flüssigkeiten**

(71) Anmelder: SAWATEC AG, 9491 Rugell (LI)
(72) Erfinder: Sawatzki, Bruno, 9492 Eschen (LI); Sawatzki, Harry, 9494 Schaan (LI); Frommelt, Igor, 9485 Nendeln (LI)

(57) **Zusammenfassung**

Die Erfindung betrifft eine Dosiervorrichtung mit einem neuartigen Ventilkörper **(32)**, der zwei zwangsgesteuerte Ventile **(33,34)** aufweist und/oder einen neuartigen Pumpkörper **(31)**, der über einen Faltenbalg **(23)** zur Aufnahme und Förderung von Hydraulikmedium **(41)** verfügt. Durch die neue Anordnung wird besonders genau und mit langer Lebensdauer der Dosiervorrichtung dosiert.

## Beschreibung

Die Erfindung betrifft eine Dosiervorrichtung nach dem Oberbegriff des Anspruches 1.

Dosiervorrichtungen werden eingesetzt, um genau zu dosierende Mengen eines Fördergutes über eine Fördervorrichtung aus einem Vorratsbehälter zu einer Bearbeitungsvorrichtung zu führen, die das Fördergut dann z.B. auf zu bearbeitende Teile aufträgt. Solche Dosiervorrichtungen müssen genau funktionieren, um die Flüssigkeiten mengenmässig exakt pumpen bzw. zur Bearbeitungsvorrichtung zuführen zu können.

Die Dosierpumpen für Dosiervorrichtungen werden herkömmlich aus einem mechanischen, hydraulischen oder pneumatischen Antrieb, einem Pumpkörper und einem Ventilkörper gebildet. Der Ventilkörper hat dabei die besondere Funktion, die zu pumpende Menge möglichst exakt zu begrenzen, während der Pumpkörper die Aufgabe hat, die zu pumpende Menge zur Verfügung zu stellen.

Der Ventilkörper umfasst in der Regel wenigstens zwei Ventile: ein Einlassventil und ein Auslassventil. Das Einlassventil erlaubt das Zuströmen von Flüssigkeit in den Pumpkörper und das Auslassventil erlaubt das Ausströmen von Flüssigkeit aus dem Pumpkörper zur Bearbeitungsvorrichtung.

Die Ventile werden in der Regel elektrisch, pneumatisch oder durch das zu pumpende Medium selbst gesteuert und zwar in Abhängigkeit von der Antriebsstellung bzw. vom Förderzustand der Pumpe. Die Art der im Stand der Technik verwendeten Ansteuerungen für die Ventile zusammen mit den jeweils gegebenen Eigenheiten der unterschiedlichen Antriebe für die chanisch) führt zu einer Begrenzung der Dosiergenauigkeit. Ein nicht optimales Abstimmen der Elemente aufeinander, führt zu Ungenauigkeiten beim Dosieren bzw. beim Zuführen von Flüssigkeiten zur Bearbeitungsvorrichtung.

Der Erfindung liegt demzufolge eine erste Aufgabe zugrunde, den Aufbau einer Dosiervorrichtung dahingehend zu verbessern, dass eine genauere und reproduzierbarere Dosierwirkung erzielt werden kann. Diese Aufgabe wird durch die Erfindung in überraschend einfacher Weise durch die Merkmale des Anspruches 1 gelöst.

Die spielfreie Zwangssteuerung der beiden Ventile führt bei gleicher Pumpleistung durch den Pumpkörper zwingend zu genaueren reproduzierbaren Dosiermengen, als dies bis anhin möglich war. Unter Zwangssteuerung wird erfindungsgemäss eine Steuerung bezeichnet, die ein zwingendes Schaltverhalten der Ventile untereinander bewirkt. Im Unterschied zum Stand der Technik geht es somit nicht darum, ein zwingendes Schaltverhalten vom Antrieb zum Ventil, sondern ein zwingendes Schaltverhalten zwischen dem Einlass- und dem Auslassventil herbeizuführen.

Abgesehen von der Lösung der oben gestellten ersten Aufgabe wird durch die Erfindung gleichzeitig auch die dynamische Druckbelastung des zu fördernden Mediums auf das notwendige Mindestmass reduziert, so dass eine allfällige Gasentwicklung bzw. Blasenbildung im Medium vermieden wird.

Gasblasen sowohl im zu fördernden Medium, als auch im Fördermedium wirken sich aufgrund der Elastizität des Gases negativ auf die Pumpleistungspräzision aus. Deshalb sind gemäss dem erfindungsgemässen Aufbau Räume vermieden, in denen sich Gasblasen sammeln können (Hohlräume mit grösserer Höhe als der nächstliegende Ausgang, bzw. Vorsprünge, die den Flüssigkeitsweg von oben her unterteilen). Dies betrifft einerseits den montierten Pumpenzustand, andererseits jedoch auch den Zustand während des Befüllens der Pumpe mit Hydraulikmedium o.dgl.

In den abhängigen Ansprüchen werden besondere Ausführungsformen der Erfindung bzw. Varianten dazu beschrieben bzw. unter Schutz gestellt.

Die Genauigkeit einer Dosiervorrichtung kann jedoch nicht nur vom genauen Schaltverhalten der Ventile, sondern auch von der Reproduzierbarkeit der Pumpleistung der Pumpe beeinflusst werden. Im Stand der Technik wurden für Feindosierpumpen bevorzugt hydraulische Pumpen eingesetzt.

Der Grundaufbau einer solchen Pumpe bzw. eines solchen Pumpkörpers ist im Oberbegriff des Anspruches 10 angegeben. Mechanische Bauteile, die über hydraulische Volumenänderungen relativ zueinander bewegt werden, müssen gegeneinander abgedichtet werden.

Die Abdichtung erfolgt bei bekannten Pumpen durch Gummi- oder Kunststoffdichtungen. Gummi- und Kunststoffdichtungen können in der Regel über einen langen Zeitraum wartungsfrei die Dichtigkeit zwischen dem druckführenden Medium und benachbarten Räumen gewährleisten. Mit zunehmender Betriebsdauer kann es jedoch vorkommen, dass kleinste Undichtigkeiten auftreten, die einerseits zu einem ersetzbaren Volumensverlust im hydraulischen Druckmedium, andererseits jedoch gegebenenfalls zu einer Einlagerung von Gas aus der Umgebungsatmosphäre - und damit zur Bildung von Gasblasen - im Druckmedium führen.

Gasblasen im hydraulischen Druckmedium führen jedoch zu einer Komprimierbarkeit des an und für sich nicht komprimierbaren Hydraulikmediums. Die Komprimierbarkeit dieses Mediums, das zum Antrieb der Membranpumpe eingesetzt wird, kann jedoch aufgrund der Komprimierbarkeit nachteiligerweise - wie auch im Fall von Gasblasen im zu fördernden Medium - zu einer Ungenauigkeit in der Dosierwirkung führen. Da die Zunahme der Gasblasen die Unsicherheit bzw. Ungenauigkeit steigert, nimmt mit zunehmendem Alter die Genauigkeit herkömmlicher Dosierpumpen ab. Dieser nicht unwesentliche Nachteil herkömmlicher Dosierpumpen wird durch einen zweiten - vom ersten unabhängigen - erfinderischen Schritt hintan gehalten.

Die besondere erfindungsgemässe Ausbildung des Pumpkörpers gemäss Anspruch 10 führt zu einer genaueren Dosierung einer erfindungsgemässen Dosiervorrichtung, und vor allem zu einer längeren Lebensdauer des Pumpkörpers im genauen Dosierbereich und damit zu einer verbesserten Dosiervorrichtung insgesamt.

Die Lösungsmerkmale dieser zweiten Aufgabenstellung finden sich im Kennzeichen des Anspruches 10. Anspruch 10 ist zwar von den vorhergehenden Ansprüchen abhängig formuliert, die Besonderheit des erfindungsgemässen Pumpkörpers kann jedoch auch unabhängig von der erfindungsgemässen Zwangssteuerung der Ventile zum Einsatz gelangen. Mittels Faltenbalg lässt sich zwar nicht zwingend die Dosiermengensteuerung verbessern, wohl aber die Lebensdauer der Pumpe und die Verbesserung der Pumpwirkung im Hinblick auf eine reproduzierbare Pumpleistung.

Die weiteren abhängigen Ansprüche definieren weitere Verbesserungen bzw. Ausgestaltungen und Varianten des Pumpkörperaufbaues.

An Hand von Zeichnungen wird die Erfindung beispielhaft näher erläutert. Die Figuren zeigen dabei unterschiedliche Aufbauten mit unterschiedlichen Effekten, die im Folgenden näher beschrieben werden. Zur Stützung dieser Beschreibung dienen jedoch ebenso die Angaben in den Patentansprüchen und in der Beschreibungseinleitung sowie in der Bezugszeichenliste. Der Inhalt dieser Beschreibungsteile bildet zusammen mit den Figuren lediglich die Offenbarung der Ausführungsbeispiele der Erfindung und schränkt den Schutzbereich der Ansprüche nicht ein.

Es zeigen dabei
- **Fig. 1**: einen Schnitt durch eine erfindungsgemässe Dosiervorrichtung mit Antrieb, Pumpkörper und Ventilkörper;
- **Fig. 2**: eine Draufsicht auf Fig. 1, teilweise geschnitten;
- **Fig. 3**: eine Variante eines Ventilkörpers mit einer anderen Ventilbauart;
- **Fig. 4**: den Aufbau nach Fig. 3 in Kombination mit einem Pumpkörper gemäss Fig.1;
- **Fig. 5**: eine Variante zum Aufbau gemäss Fig. 4;
- **Fig. 6**: eine Variante zum Aufbau gemäss Fig. 4;
- **Fig. 7**: eine weitere Variante zum Aufbau gemäss Fig. 4;
- **Fig. 8**: eine Variante zum Aufbau gemäss Fig. 7 mit einer bevorzugt rein schwimmenden Ventilnadel im Ventilkörper;
- **Fig. 9**: eine Variante zum Aufbau nach Fig. 8 mit unterschiedlich aufgebauter Ventilnadel;
- **Fig. 10**: eine bevorzugte Variante zur schwimmenden Ventilnadel gemäss Fig. 8 oder 9;
- **Fig. 11**: die Draufsicht auf den Aufbau gemäss Fig. 10;
- **Fig. 12**: einen anderen Aufbau einer erfindungsgemässen Dosiervorrichtung mit Antrieb, Pumpkörper und Ventilkörper im Schnitt gezeichnet;
- **Fig. 13**: den Schnitt durch einen Ventilkörper eines bevorzugten Aufbaus;
- **Fig. 14**: die Draufsicht auf den Ventilkörper nach Fig.13 und
- **Fig. 15**: den Schnitt durch einen vollständigen bevorzugten Aufbau mit Pumpkörper und Antrieb.

Die Figuren werden übergreifend beschrieben; gleiche Bauteile tragen gleiche Bezugszeichen, ähnliche Bauteile mit ähnlichen Funktionen tragen gleiche Bezugszeichen mit unterschiedlichen Indizes. Die Bezugnahme auf Bezugszeichen ohne Angabe von Indizes umfasst dabei regelmässig alle entsprechenden Bezugszeichen ungeachtet deren individuellen Indizes.

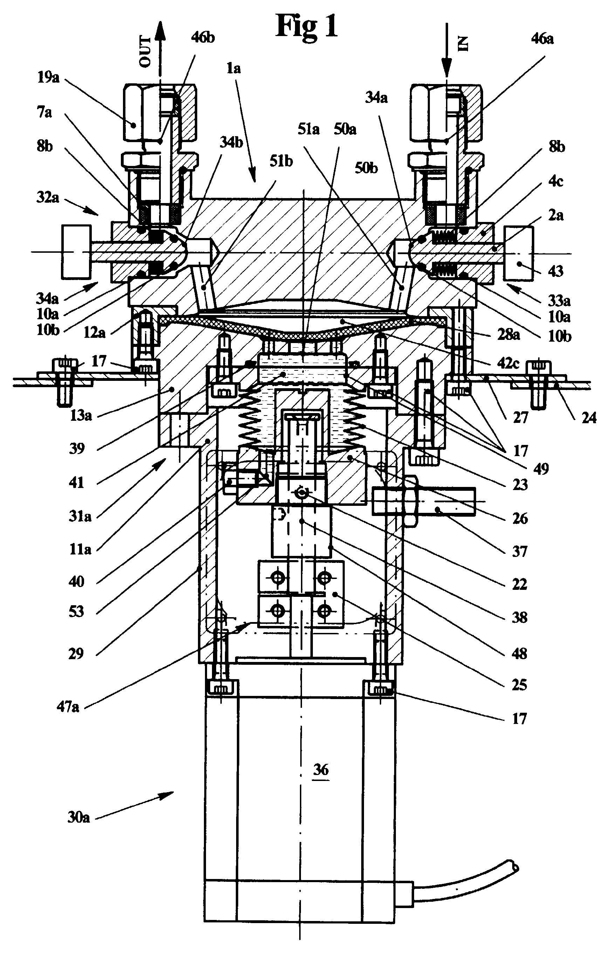

U.a. in **Fig.1** ist ein Ausführungsbeispiel der Erfindung in seiner Gesamtheit teilweise geschnitten dargestellt. Ein Antrieb **30,** der bevorzugt einen elektrischen Motor, insbesondere einen Steppermotor umfasst, ist über eine Kupplung **47** mit einem Pumpkörper **31** verbunden. Die Kupplung **47** umfasst bei allen dargestellten Ausführungsbeispielen eine Schlingklemmung **25** und eine Kugelumlaufspindel **38**, die mit einer Kugelumlaufmutter **48** so zusammenwirken, dass eine Rotation an der Motorabtriebswelle zu einer Axialverschiebung der Kugelumlaufmutter **48** führt. Bei der Anwendung eines umdrehungsgeregelten Motors **36**, insbesondere eines Steppermotors, lässt sich dadurch eine genaue Axialverschiebung der Kugelumlaufmutter **48** steuern.

Mit der Kugelumlaufmutter **48** verbunden ist ein Flansch **26**, der über einen Gewindestift **22** gesichert ist. Mit diesem gasdicht verbunden - z.B. geklebt, geschweisst oder gelötet - ist ein Faltenbalg **23.**

Der Faltenbalg ist beim bevorzugten Ausführungsbeispiel wie der Flansch aus Metall gefertigt. Aufbauten aus Kunststoff o.dgl. liegen jedoch auch im Bereich der Erfindung, wobei im Sinne der optimalen Reproduzierbarkeit von Pumpleistungen auf geringste Materialelastizität hinsichtlich Dehnungsverhalten Wert gelegt wird. Vergleichbar mit der Vermeidung von Gasblasen darf durch den Aufbau möglichst keine Komprimierbarkeit und keine Quasi-Komprimierbarkeit durch elastische Behälterwände im Bereich der hydraulischen Pumpe erlaubt werden.

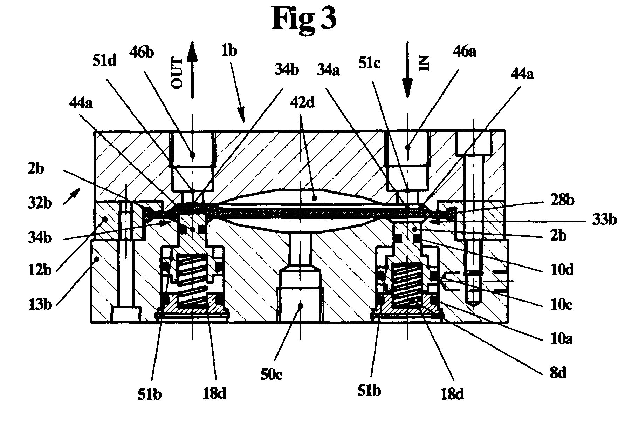

Von diesem Prinzip ausgenommen sind Sonderaufbauten im Rahmen der Erfindung, bei denen zwar die erfindungsgemässe Zwangssteuerung der Ventile angewandt, jedoch auf einen besonders exakten hydraulischen Förderhub verzichtet wird. Ein solcher Aufbau könnte beispielsweise durch **Fig.3** angedeutet sein, bei der der Pumpenkörper nur teilweise und der Antrieb nicht dargestellt ist. Bei diesem Aufbau könnte z.B. Druckluft o.dgl. Hydraulik ersetzen.

Bei den Aufbauten mit Faltenbalg **23** ist dieser anderenends mit einem Hydraulikkopf **13** druckdicht verbunden. Eine Rotation des Motors **36** führt somit zu einer Komprimierung oder Entspannung des vom Faltenbalg **23** umschlossenen Raumes. Beinhaltet dieser - wie bevorzugt - ein Hydraulikmedium **41**, so wird dieses in den Hydraulikkopf **13** gefördert bzw. dort abgesogen.

Beim dargestellten Ausführungsbeispiel ist der Faltenbalg **23** unmittelbar an einem Montagering **49** druckdicht befestigt, z.B. angeschweisst, der mittels Schrauben **17** am Hydraulikkopf **13** druckdicht - z.B., wie dargestellt mittels Dichtring **39** abgedichtet - befestigt ist.

Der Flansch **26** weist auch eine Hydraulikflüssigkeitsspeiseleitung **53** und einen mittels Gewindestopfen **40** verschliessbaren Anschluss auf. Die Leitung **53** mündet an der tiefsten Stelle des vom Faltenbalg **23** umschlossenen Raumes, so dass beim Befüllen - sofern die Pumpe auf den Kopf gestellt ist - jegliche Gasblasen über die Leitung **53** entweichen können.

Der Flansch **26** wirkt ausserdem mit einem Homesensor zusammen, der die Ausgangsposition bzw. Ansaugposition des Pumpkolbens oder des Faltenbalges für eine nicht näher dargestellte Steuerung überwacht. Diese Steuerung steuert u.a. den elektrischen Antriebsmotor **36.**

Der Hydraulikkopf **13** umfasst, wie an sich bekannt, Kanäle **50a,b**, die zu einer Pumpkammer **42** führen. Der Hydraulikteil der Pumpkammer **42** ist durch eine Membrane **28** vom Fördermediumteil getrennt. Dieser Teil ist mit einem Einlassventil **33** und mit einem Auslassventil **34** ausgerüstet, so dass eine hydraulische induzierte Pumpbewegung der Membrane zu einer Förderung von Fördermedium vom Einlassventil **33** zum Auslassventil **34** führt.

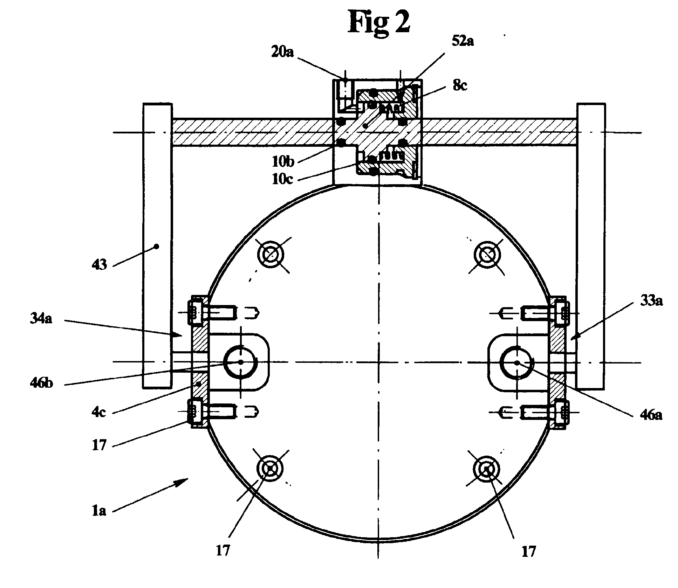

Die Membrane **28** ist beim vorliegenden Ausführungsbeispiel, das im Gesamtaufbau zylindrisch ausgebildet ist, mittels Schrauben **17** und Klemmflansch **12** am Hydraulikkopf druckdicht angeflanscht. In **Fig.2** sieht man den zylindrischen Aufbau von oben, etwa so, wie er im montierten Zustand einem Bedienpersonal zugänglich ist.

Die Ventile **33** und **34** befinden sich im Ventilkörper **32,** der Förderkanäle **51** zur Verbindung mit der Pumpkammer **42** aufweist. Eingangs-, bzw. ausgangsseitig der Ventile **33** bzw. **34** sind diese Förderkanäle mit Eingangs- bzw. Ausgangsleitungen **46** verbunden, die bevorzugt mit Fittings **19** ausgerüstet sind. Die Eingangsleitung **46a** ist im Betriebsaufbau mit einem Vorratsbehälter für das zu fördernde Medium und die Ausgangsleitung **46b** ist mit der Auftragsvorrichtung, z.B. einer Sprühdüse o.dgl., verbunden.

Um Strömungswiderstände und Wirbelbildungen im Transportweg des zu fördernden Mediums zu vermeiden, sind die Leitungen **46** bevorzugt mit besonderen Dichtringen **7** ausgerüstet, die einen dichten jedoch stufenlosen Übergang zwischen den Leitungen **46** zum Ventilbereich ermöglichen.

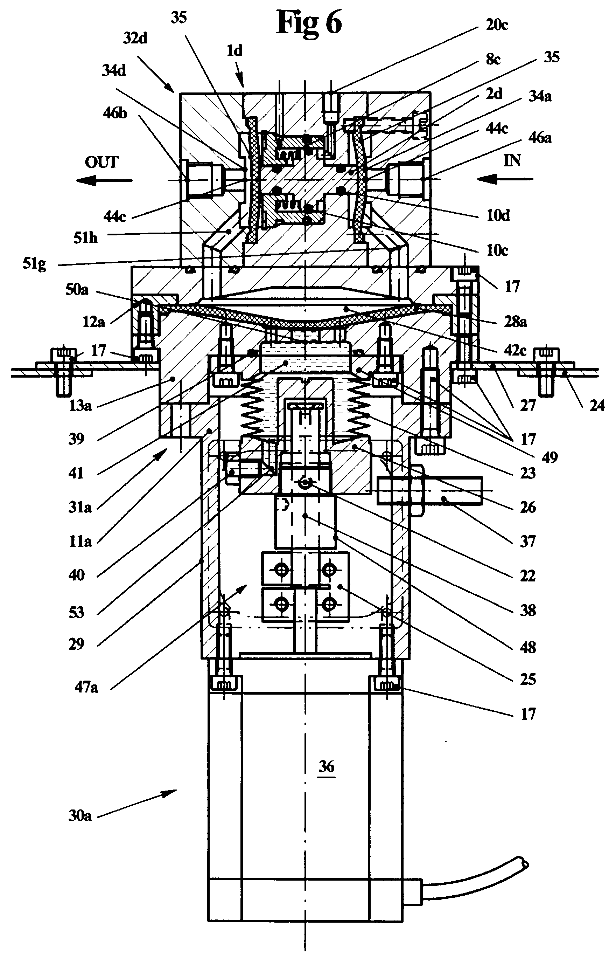

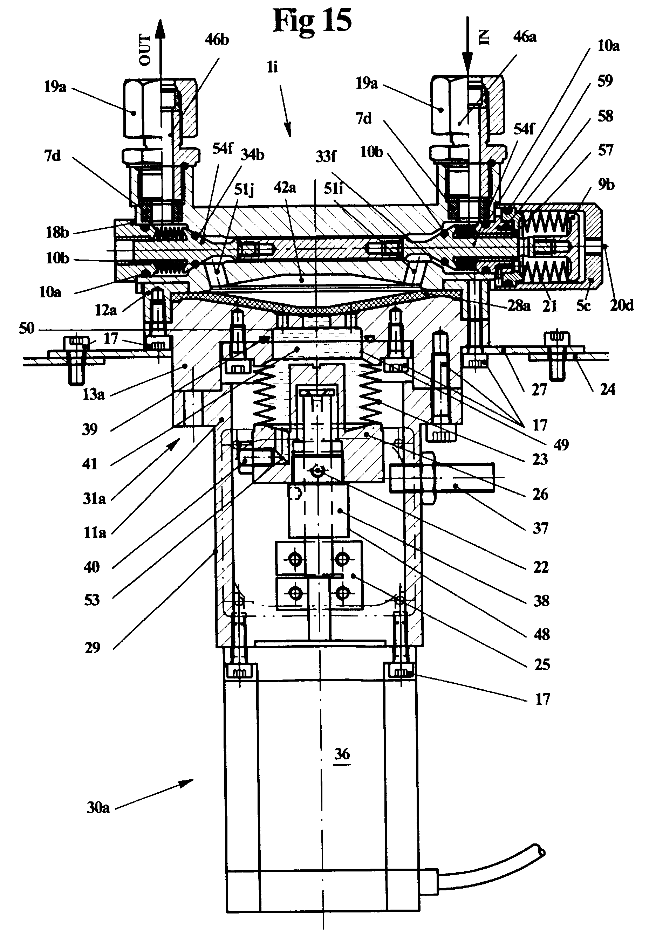

Im Rahmen der Erfindung liegen verschiedene Ventilaufbauten, von denen nur einige beispielhaft dargestellt sind. Verbindend ist allen die Zwangssteuerung zwischen dem Eingangsventil **33** und dem Ausgangsventil **34**. Der Ventilaufbau gemäss **Fig.1** und **2** sieht dabei pilzförmige Ventilkolben **2a** vor, die mittels Verbindungsbügel **43** gleichzeitig angesteuert werden. Der Verbindungsbügel **43** trägt dazu einen Steuerkolben **52a,** der - über einen Steuerfitting **20** angesteuert - den Verbindungsbügel **43** einmal nach rechts und einmal nach links verschiebt und derart gleichzeitig beide Ventile **33a** und **33b** zwangssteuert. In **Fig.2** ist dieser Aufbau gut zu sehen; er ist allerdings nur ein symbolisches Beispiel für die mechanische Zwangssteuerung zweier Ventile von aussen. Bevorzugt sind jedoch innenliegende mechanische Zwangssteuerungen wie z.B. nach den **Fig.6-15**.

Die besonderen Ventile **33a** und **34a** gemäss **Fig.1** weisen Druckfedern **8b** auf, die ebenso als Faltenbalg aufgebaut sind. Diese Faltenbälge **8b** bewerkstelligen eine optimale Dichtung zwischen Ventilkolben **2a** und Umgebungsatmosphäre. Abgesehen davon bewirken sie jedoch auch die Vermeidung von ruhenden Ecken und Nischen, in denen sich zu förderndes Medium ansammeln, ausfällen oder ablagern kann. Die Faltenbälge 8b werden durch ihre Anordnung in unmittelbarer Nähe der Eingangs- bzw. Ausgangsleitungen **46a,b** optimal mit zu förderndem Medium umspült.

Die Ventilkolben **2a** sind somit leckfrei in Hülsen **4c** gelagert, die statisch mittels O-Ringen **10a** gegenüber dem Ventilgehäuse abgedichtet sind.

Zur Verbesserung des Strömungsverhaltens des zu fördernden Mediums beim Öffnen und Schliessen der Ventile **33a** und **34a** sind gemäss einer besonderen Ausgestaltung am Pilzkopf der Ventilkolben O-Ringe **10b** angebracht, die einerseits ein verschleissfreies Dichten und andererseits durch die elastische Verformung beim Öffnen und Schliessen ein sinusförmiges Volumenändern bewirken, das somit ruckartige Volumenänderungen vermeidet. Gerade ruckartige Volumenänderungen können jedoch erfahrungsgemäss nachteilige Blasenbildungen beim zu fördernden Medium bewirken.

Gemäss einer besonderen Ausgestaltung ist die erfindungsgemässe Pumpe mittels Schrauben **17** in einem Aufnahmeflansch **27** befestigbar, so dass beim Einbau in ein Gerätegehäuse eine Trennung zwischen Antrieb (elektrischer Teil) und zu förderndem Medium bewirkt wird. Eine Verunreinigung des Antriebes bei Manipulation mit zu fördernder Flüssigkeit ist somit hintangehalten. Andererseits ist der flüssigkeitsführende Teil gut zugänglich.

Der Aufbau nach **Fig.3** unterscheidet sich grundsätzlich vom oben Beschriebenen. Hier erfolgt eine Zwangssteuerung der Ventile **33b** und **34b** über ein hydraulisches oder pneumatisches Medium. Zwei Ventilkolben **2b** werden durch O-Ringgedichtete und federbeaufschlagte, einstückig ausgebildete Steuerkolben **52b** zwangsweise und gegenläufig in Schliess- bzw. Öffenrichtung bewegt. Die Ventilkolben **2b** beaufschlagen dabei beim Schliessvorgang eine Membrane **28b**, die auf ihrer anderen Seite je mit einem Dichtsitz **44a** kooperiert. Das Auslassventil **34b** ist geschlossen dargestellt, während das Einlassventil **33b** geöffnet dargestellt ist. Die Membrane **28b** übernimmt bei dieser Ausführungsart der Erfindung auch die Dichtfunktion der O-Ringe **10b** gem. **Fig.1**.

**Fig.3** ist ohne weiteren Antrieb dargestellt, da dieser Aufbau auch rein pneumatisch oder hydraulisch betreibbar sein kann, d.h. ohne integrierten Elektromotor **36**. In diesem Fall kann die Antriebshydraulik, die über einen Kanal **50c** die Pumpbewegung einleitet, auch direkt mit den Steuerkolben **52b** gekoppelt sein, wie nicht näher dargestellt. Die aus dem vollen Material ausgebohrten Steuerzylinder der Steuerkolben **52b** sind mittels Stopfen **18d** verschlossen, die eine einfache Montage ermöglichen.

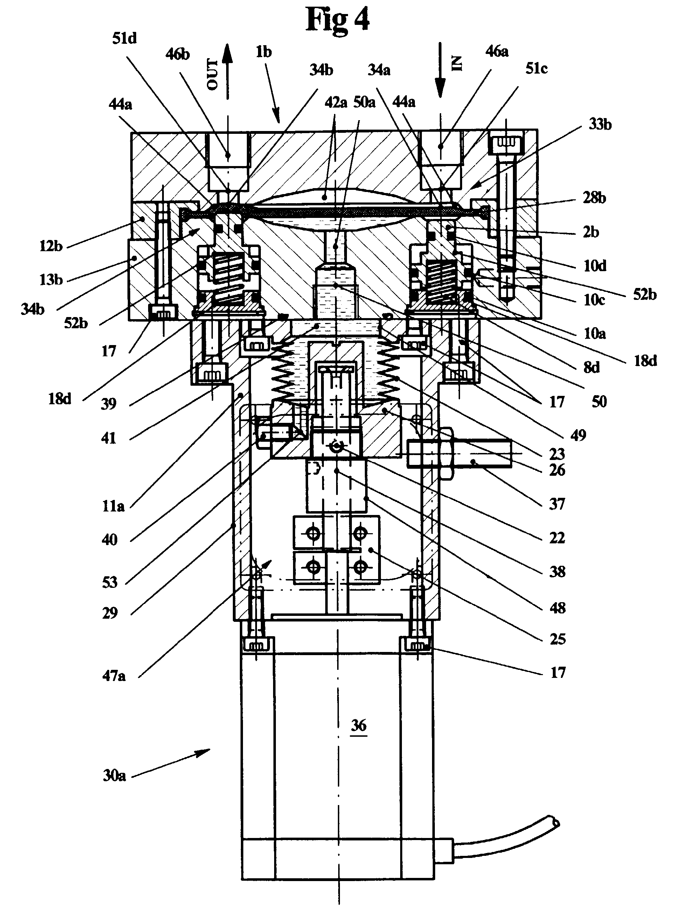

Einen kombinierten Aufbau - mit elektrischem Antrieb gemäss **Fig.1** ist im Aufbau nach **Fig.4** beispielhaft angegeben, wobei auch hier die hydraulischen Steuerleitungen für die Steuerkolben **52b** nicht näher dargestellt sind. Diese können jedoch unmittelbar mit dem Raum des Hydraulikmediums **41** bzw. mit dem Kanal **50a** verbunden sein. Unabhängige Ansteuerungen liegen jedoch auch im Bereich der Erfindung.

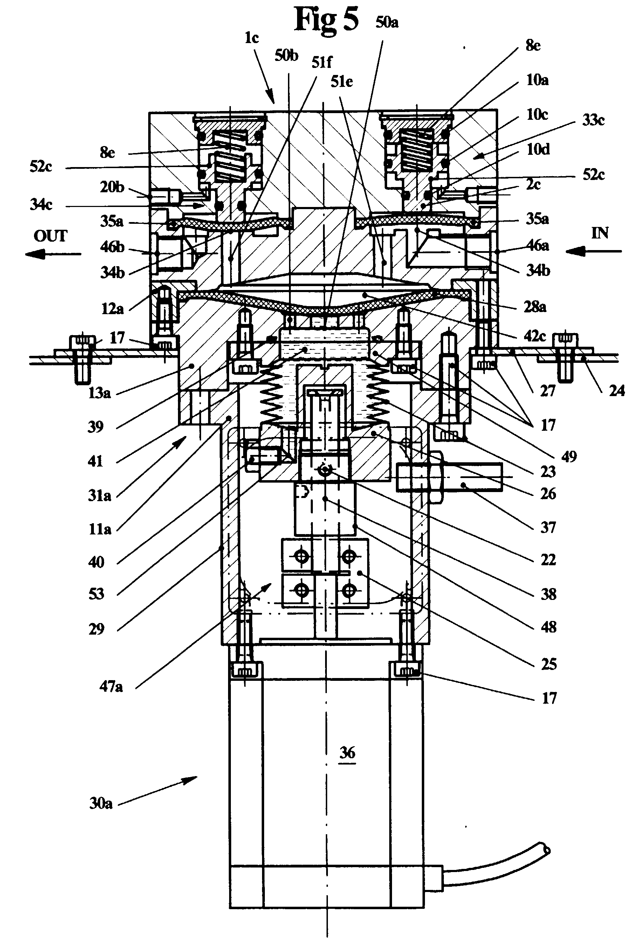

Die Variante gemäss **Fig.5** weist für die Ventile **33c** und **34c** eine vergleichbare Kolbentechnik wie jene nach **Fig.3** auf. Es sind jedoch eigene Ventilmembranen **35a** vorgesehen, die mit Dichtsitzen **44b** kooperieren. Bei dieser Variante wird die Membrane **28a** weniger auf Verschleiss beansprucht und die Ventilmembranen können besser und ausschliesslich für Ihre Funktion ausgelegt werden.

Eine Vereinfachung des letzen Prinzips stellt die Variante gemäss **Fig.6** dar, indem die Ventilkolben **2d** über einen Steuerkolben **52d** einstückig verbunden sind.

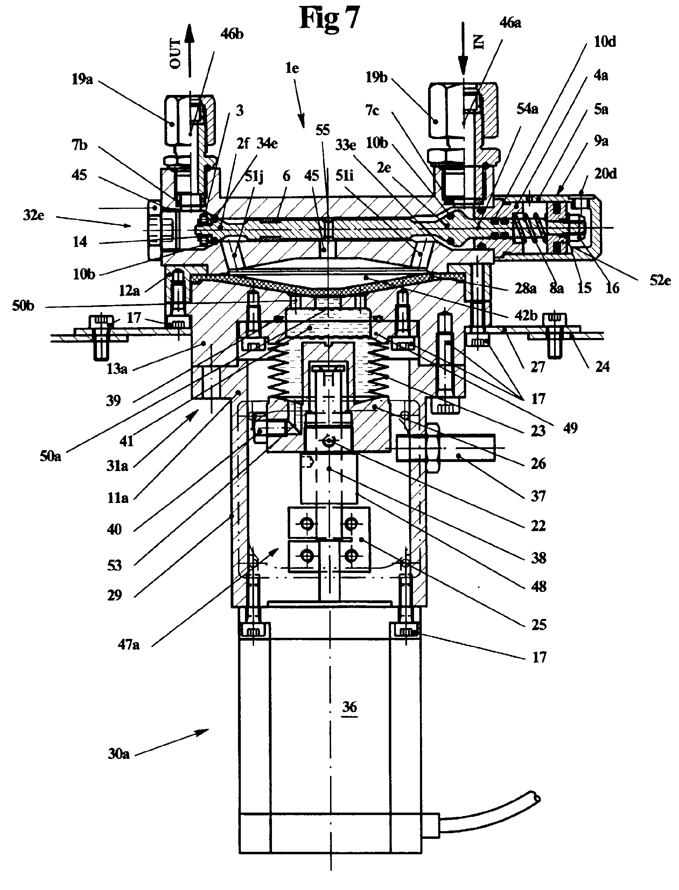

**Fig.7-15** stellen gegenüber allen bisher beschriebenen Ventilkörpern eine grundsätzlich unterschiedliche Variante dar. Die Einlassventile **33e-f** und die Auslassventile **34e-g** verfügen über einen gemeinsamen Schieber **54**, der an seinen beiden Enden je einen Ventilkolben **2e-k** trägt. Diese Ventilkolben arbeiten mit Ventilsitzen des Ventilkörpers zusammen und schliessen dort bevorzugt auch über O-Ringe **10b,** die auch hier den Effekt des sinusförmigen Volumenänderns mit sich bringen. Der Schieber **54** ist in einer Bohrung des Ventilkörpers gelagert und wird hydraulisch oder pneumatisch mittels Steuerkolben **52e** betätigt. Über doppelte Dichtringe **10d** ist er gegenüber dem Steuerzylinder abgedichtet.

Der Aufbau gemäss **Fig.7** hat dabei folgende Besonderheiten: Der Steuerkolben **2f** arbeitet volumenverdrängend im Bereich des Auslassventils **34e.** Dies bewirkt gemäss einer besonderen Idee der Erfindung, dass beim Schliessen des Auslassventils **34e** etwas vom zu fördernden Medium aus der Ausgangsleitung **46b** zurückgesaugt wird. Das bewirkt, dass allfällige Tropfen an allfälligen Auslassdüsen in die Leitung zurückgesaugt werden. Andererseits wird beim Öffnen des Auslassventils **34e** der umgekehrte Effekt erzielt, indem der Kolben wieder eine Verdrängung des zu fördernden Mediums in die Ausgangsleitung **46b** bewirkt - und zwar ohne Pumpleistung an der Membrane **28a**. Der allfällig zurückgesaugte Tropfen wird somit wieder an der Stelle plaziert, an der er zuvor entfernt worden war. Eine präzise Dosierung ist somit gewährleistet und ein Nachtropfverhalten hintan gehalten.

Zu Montagezwecken ist der Schieber **54a** beim Steuerkolben **2f** zweigeteilt. Ein Bremsring **3** hält ihn verlustsicher in der Bohrung. Eingeführt wird der Schieber **54a** von der Eingangsseite **33e** her.

Eine Montagebohrung **55** gestattet zusammen mit der Montagebohrung **45** das Einsetzen eines Dorns zum Gegenhalten beim Aufschrauben des Bremsringes **3**.

Die Montagebohrung **45** und Förderkanäle **51** sind so angelegt, dass in Betriebsstellung allfällige Gasblasen nach oben zu den Ventilen **34** oder **33** entweichen können.

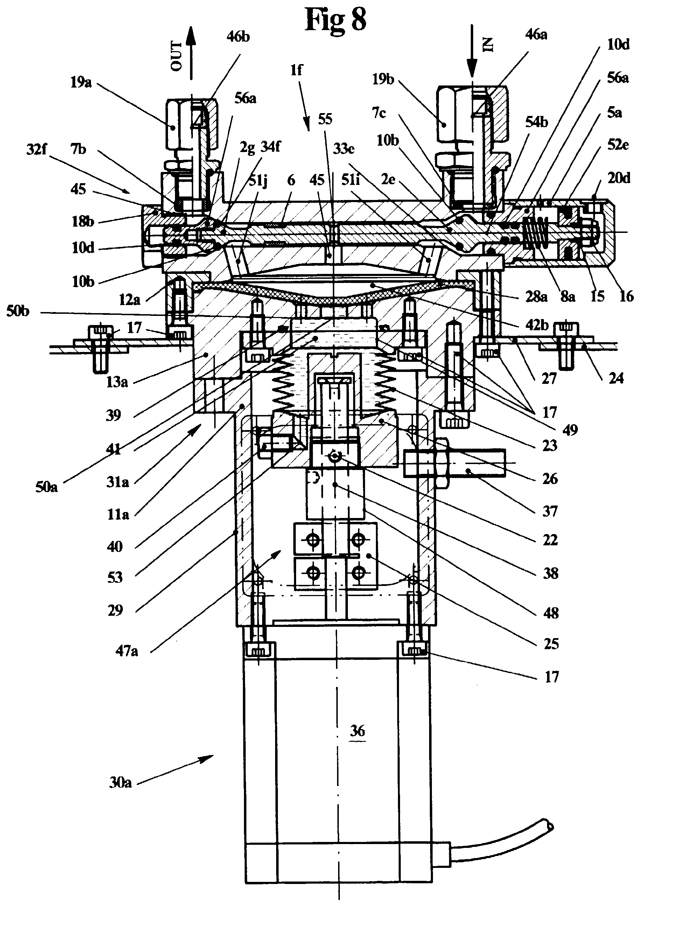

Die Varianten nach **Fig.8-15** unterscheiden sich vom Vorhergehenden insofern, als die Schieber **54b-e** völlig freischwimmend angeordnet sind und eine Verdrängungswirkung der Ventilkolben völlig entfällt. Dies hat wieder andere Vorteile: insbesondere kommt es eben zu keinen zusätzlichen Bewegungen des zu fördernden Mediums - mit Ausnahme der eigentlichen Pumpförderbewegung.

Die Ventilkolben **2g;i;k** sind mit je einem Führungsteil **56** in einem Gewindestopfen **18b-c** gelagert und gegenüber diesem abgedichtet, so dass es zu keiner Verdrängerwirkung kommen kann, wenn der Schieber **54b-e** verschoben wird.

Der Aufbau nach **Fig.8** wird dabei ebenso von der Einlassventilseite **33e** her eingebaut, wobei der Führungsteil **56a** auf den Steuerkolben **2g** aufgeschraubt wird.

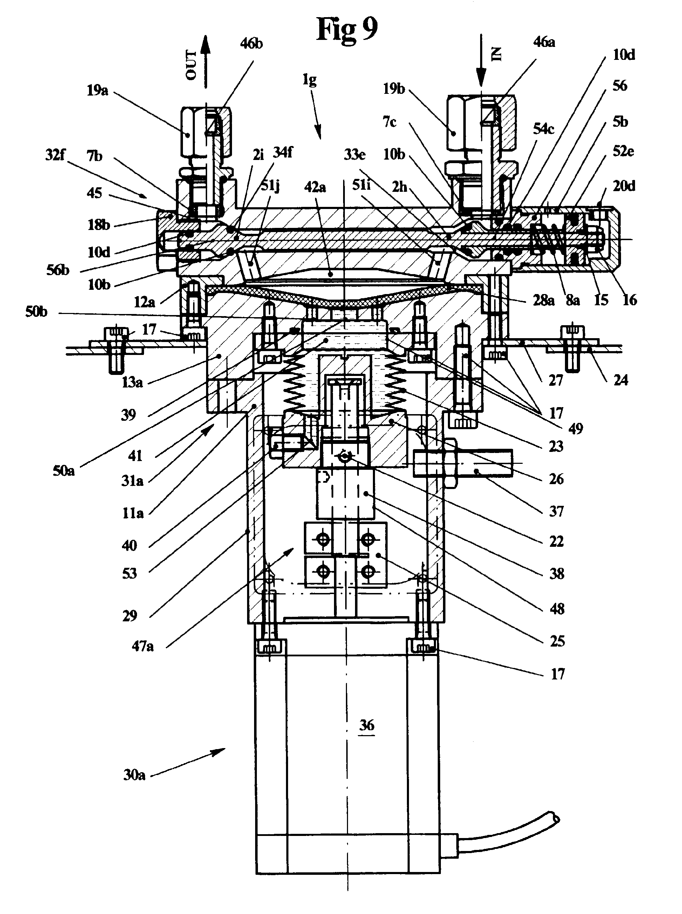

Die Alternative gemäss **Fig.9** wird von der Auslassventilseite 34f her zusammengebaut. Dazu ist der Ventilkolben **2h** zweigeteilt ausgebildet, wobei der zweite Teil mutternförmig über den ersten geschraubt wird.

Zum Gegenhalten dient bei dieser Variante ein Schraubenschlitz im Steuerkolben **2e,** so dass eine Montagebohrung im Schieber **54e** entfallen kann.

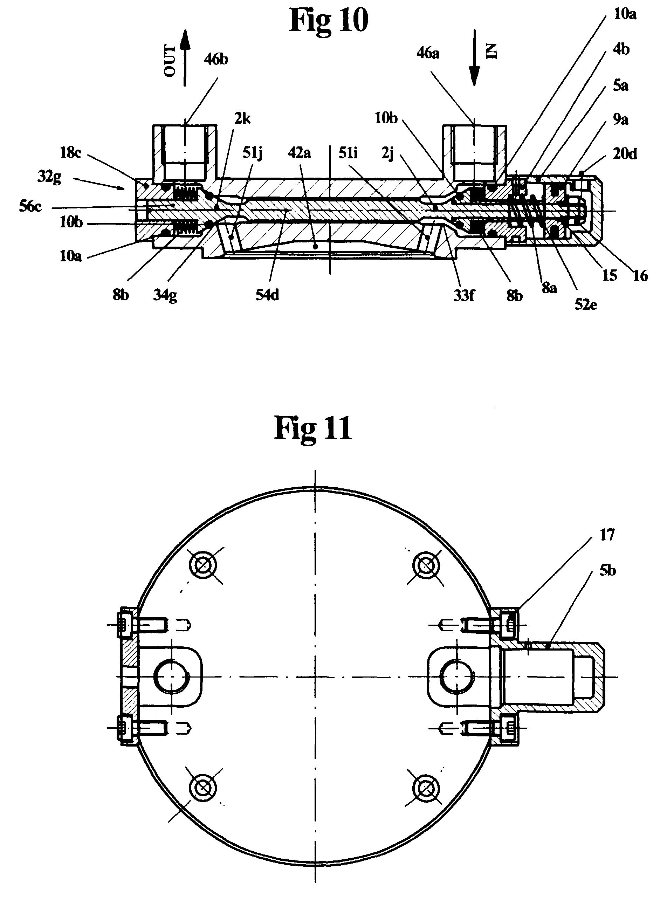

Der Aufbau nach **Fig.10-12** ist weiters insofern unterschiedlich, als die Abdichtung der Ventilkolben **2j** und **2k** über als Faltenbalg ausgebildete Druckfedern **8b** bewerkstelligt wird, die einerseits mit dem Ventilkolben **2k** bzw. **2j** und andererseits mit dem Gewindestopfen **18c** bzw. mit der Hülse **4b** druckdicht verbunden sind. Hinsichtlich der weiter oben beschriebenen Vorteile dieser Druckfedern **8b** ist dieser Aufbau bevorzugt.

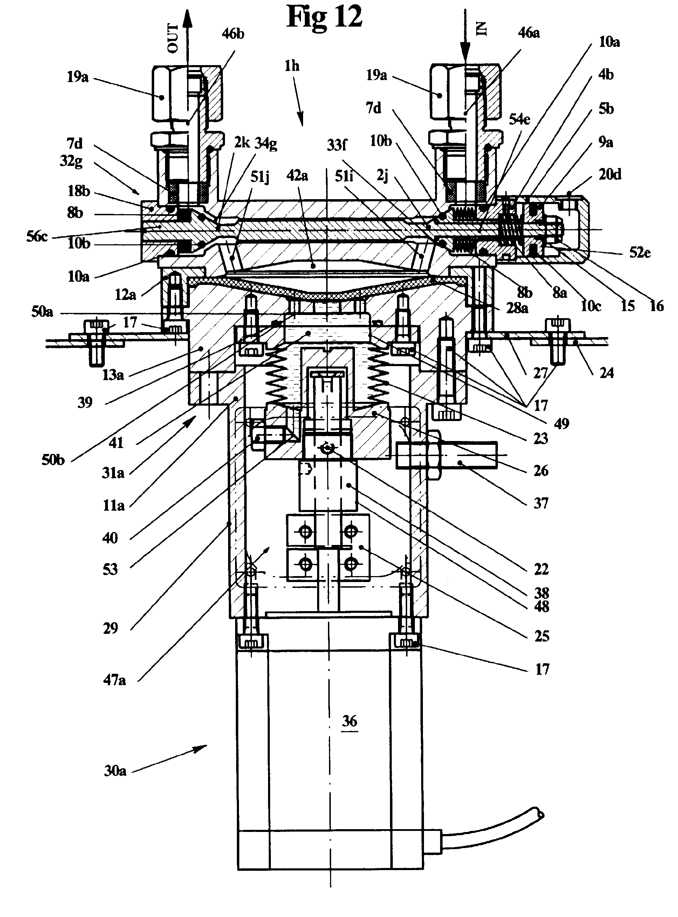

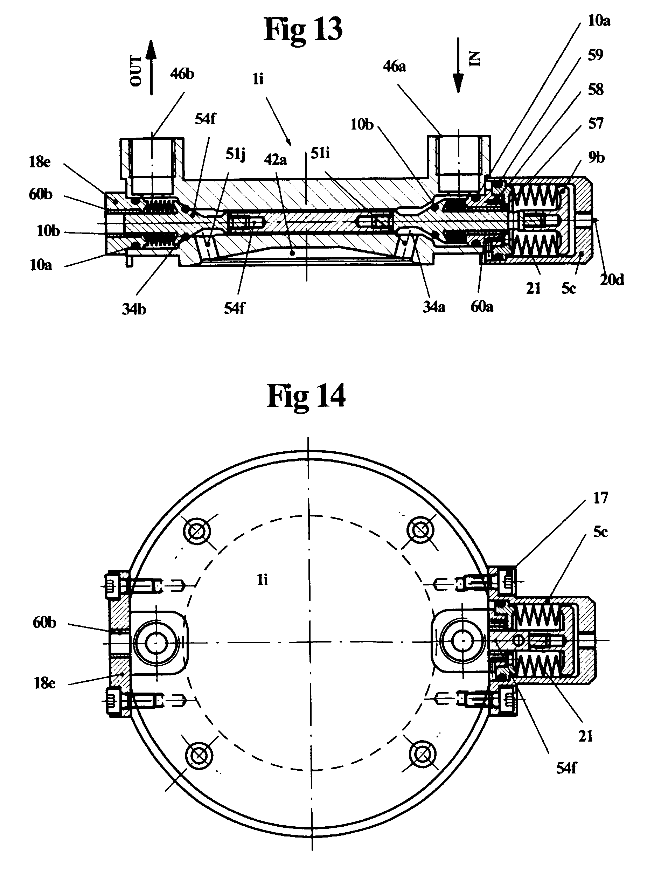

Der Aufbau gemäss den **Fig.13-15** unterscheidet sich von den vorgängig beschriebenen Aufbauten durch einen bevorzugten Faltenbalg **21**, der einen Schieber **54f** gegenüber dem Gehäuse des Pumpenkopfes **1i** federnd in Schliessrichtung des Ausgangsventils **34b** abstützt. Der Faltenbalg **21** ersetzt dabei die Feder **8a** und den O-Ring **10c** aus **Fig.12.** Erreicht wird dadurch, dass der "stick-slip-Effekt" entfällt, der sich nachteilig bei O-Ringdichtungen ergeben kann. Die erfindungsgemässe neue Ausgestaltung mit dem Faltenbalg **21** erlaubt unter allen Umständen ein gleichmässiges, nichtverzögertes Betätigen des Komplettkolbens **9b.** Dies bewirkt aber andererseits ein besonders exaktes und gleichmässiges, stressvermeidendes Dosieren.

Ein weiterer Unterschied, der demselben Effekt dient, sind bevorzugt angebrachte Gleitlager **60** zur reibungsvermindernden, axialen Führung des Schiebers **54**.

Die Figuren und Figurenbeschreibung beschränken den Schutzbereich der Ansprüche nicht. Die einzelnen dargestellten Elemente in den unterschiedlichen Figuren können im Rahmen des Fachwissens eines Fachmannes nach Studium dieser Anmeldung kombiniert bzw. variiert werden, ohne den Schutzbereich der Ansprüche zu verlassen.

### Bezugszeichenliste

Die nachfolgende Liste gibt alle Bezugszeichen an, die in der Zeichnung dargestellt sind, wobei im Falle von unterschiedlichen Bauteilen mit ähnlichen Funktionen grundsätzlich Bezugszeichen mit Indizes vergeben sind. Solche Bezugszeichen kommen in den Figuren immer mit Indizes vor; in der Beschreibung und den Patentansprüchen wird jedoch vereinfachend lediglich das Bezugszeichen ohne Indizes angegeben. Damit sind in der Beschreibung und den Ansprüchen jedoch alle Gegenstände umfasst, die dem betroffenen Bezugszeichen mit allen möglichen Indizes entsprechen. Die Zeichnung ist daher zusammen mit dieser Bezugszeichenliste zu lesen.
- 1: Pumpenkopf **a - i**
- 2: Ventilkolben **a - k**
- 3: Bremsring
- 4: Hülse **a - c**
- 5: Abdeckkappe **a - c**
- 6: Führungsring
- 7: Dichtring, **a - d**
- 8: Druckfeder, **a - f**
- 9: Pneumatik, Komplettkolben, **a,b**
- 10: O-Ring **a - d**
- 11: Rohrflansch, **a**
- 12: Klemmflansch, **a - b**
- 13: Hydraulikkopf, **a - d**
- 14: Sicherungsscheibe
- 15: Unterlagsscheibe
- 16: Sicherungsmutter
- 17: Schraube, symbolisch, umfasst auch andere vergleichbare Befestigungsmöglichkeiten. Alle Schrauben, auch mit unterschiedlichem Aufbau tragen - vereinfachend - nur dieses Bezugszeichen.
- 18: Stopfen, **a - e**
- 19: Fitting, **a - e**
- 20: Steuerfitting, **a - d**
- 21: Federnder Faltenbalg für Steuerkolben
- 22: Gewindestift
- 23: Faltenbalg
- 24: Vorrichtungsgehäuse
- 25: Schlingklemmung
- 26: Flansch
- 27: Aufnahmeflansch
- 28: Membrane, **a - b**
- 29: Kupplungsgehäuse
- 30: Antrieb
- 31: Pumpkörper
- 32: Ventilkörper **a-g**
- 33: Einlassventil **a-f**
- 34: Auslassventil **a-g**
- 35: Ventilmembrane
- 36: Motor, insbesondere Stepper- Motor
- 37: Homesensor
- 38: Kugelumlaufspindel
- 39: Dichtring
- 40: Gewindestopfen
- 41: Hydraulikmedium
- 42: Pumpkammer
- 43: Verbindungsbügel
- 44: Dichtsitz, **a - c**
- 45: Spülleitung (Montagebohrung)
- 46: Eingangs- Ausgangsleitung
- 47: Kupplung **a**
- 48: Kugelumlaufmutter
- 49: Montagering
- 50: Kanäle **a-c**
- 51: Förderkanäle **a-j**
- 52: Steuerkolben, insbesondere pneumatisch angetrieben
- 53: Hydraulikflüssigkeitsspeiseleitung
- 54: Schieber **a-f**
- 55: Montagebohrung
- 56: Führungsteil **a-c**
- 57: Stützring
- 58: Montagering mit Entlüftungsbohrung
- 59: Druckluft-Dichtring
- **60**: Gleitlager **a,b**

## Patentansprüche

1. Dosiervorrichtung mit einem Ventilkörper **(32)** und wenigstens einem darin enthaltenen Einlassventil **(33)** und wenigstens einem darin enthaltenen Auslassventil **(34)**, **dadurch gekennzeichnet, dass** das Einlass- mit dem Auslassventil **(33,34)** durch eine Zwangssteuerung **(43;52d;54)** verbunden ist.

2. Dosiervorrichtung nach Anspruch 1, **dadurch gekennzeichnet, dass** die Zwangssteuerung durch einen gemeinsamen hydraulischen, pneumatischen oder elektrischen Schaltkreis für beide Ventile **(33,34)** gebildet ist.

3. Dosiervorrichtung nach Anspruch 1, **dadurch gekennzeichnet, dass** die Zwangssteuerung ein steifes Verbindungsteil **(43;54)** umfasst, das vorzugsweise mittels - gegebenenfalls hydraulischem oder pneumatischen -Antrieb **(52)** ansteuerbar ist.

4. Dosiervorrichtung nach Anspruch 3, **dadurch gekennzeichnet, dass** das Verbindungsteil als Verbindungsbügel **(43)** ausgebildet ist, der ausserhalb des Ventilkörpers **(32)** gelagert ist.

5. Dosiervorrichtung nach Anspruch 3, **dadurch gekennzeichnet, dass** das Verbindungsteil als Schieber **(54)** ausgebildet ist, der beiderends je einen Ventilkolben **(2)** trägt.

6. Dosiervorrichtung nach Anspruch 5, **dadurch gekennzeichnet, dass** der Schieber **(54)** in Schliessrichtung des Einlassventils **(33)** mittels Feder **(8)** federbelastet ist, wobei der Antrieb zur Betätigung des Schiebers **(54)** vorzugsweise einen hydraulischen oder pneumatischen Steuerkolben **(52)** umfasst.

7. Dosiervorrichtung nach Anspruch 5, **dadurch gekennzeichnet, dass** wenigstens eine Feder als federnder Faltenbalg **(8b;f;21)** ausgebildet ist, der vorzugsweise die Abdichtung zwischen Schieber **(54)** und Ventilkörper **(32)** bildet und gegebenenfalls mit einer Druckleitung verbunden ist, über die er zur Variierung seiner Federkraft und damit zur Ansteuerung der Ventile **(33,34)** expandiert oder komprimiert werden kann.

8. Dosiervorrichtung nach einem der vorhergehenden Ansprüche, **dadurch gekennzeichnet, dass** der Schieber **(54)** für Montagezwecke mehrteilig ausgebildet ist.

9. Dosiervorrichtung nach einem der vorhergehenden Ansprüche, **dadurch gekennzeichnet, dass** die Ventilkolben **(2)** einen pilz- oder halbkugel- oder kegelförmigen Aufbau haben und mit gegengleichen Dichtsitzen des Ventilkörpers **(32)** kooperieren, wobei sie bevorzugt mit einem O-Ring **(10b)** ausgerüstet sind, der als Dichtung zentrisch zwischen dem jeweiligen Ventilkolben **(2)** und seinem Dichtsitz angeordnet ist.

10. Dosiervorrichtung mit einem Pumpkörper **(31)** mit hydraulischem Druckantrieb und einem Antrieb **(30)** nach einem der vorhergehenden Ansprüche, **dadurch gekennzeichnet, dass** der Pumpkörper **(31)** einen Faltenbalg **(23)** umfasst, der zwischen einem Flansch **(26)** und dem Hydraulikkopf **(13)** komprimierbar bzw. expandierbar angeordnet und mit dem Flansch **(26)** bzw. mit dem Hydraulikkopf **(13)** druckdicht verbunden ist.

11. Dosiervorrichtung nach Anspruch 10, oder nach Anspruch 7, **dadurch gekennzeichnet, dass der Faltenbalg (23 oder 8b,f)** aus Metall aufgebaut und mit den anschliessenden Bauteilen vorzugsweise verklebt, verlötet oder verschweisst ist.

12. Dosiervorrichtung nach Anspruch 10 oder 11, **dadurch gekennzeichnet, dass** der Flansch **(26)** mittelbar oder unmittelbar durch einen - vorzugsweise elektrischen, insbesondere Stepper- - Motor **(36)** antreibbar ist.

13. Dosiervorrichtung nach Anspruch 12, **dadurch gekennzeichnet, dass** der Motor **(36)** über ein Getriebe - insbesondere über eine Kugelumlaufspindel und Kugelumlaufmutter **(38,48)** - mit dem Flansch **(26)** verbunden ist.

14. Dosiervorrichtung nach einem der vorhergehenden Ansprüche, **dadurch gekennzeichnet, dass** dem Flansch **(26)** ein Homesensor **(37)** zur Positionserfassung und Motorsteuerung zugeordnet ist.

15. Dosiervorrichtung nach einem der vorhergehenden Ansprüche, **dadurch gekennzeichnet, dass** alle Flächen der Räume, in denen Hydraulikmedium **(41)** für die Pumpe oder zu fördernde Medien vorkommen, so ausgebildet sind, dass in Herstellungs-, Befüllungs- und Montagelage allfällige Gasblasen einem Auslass **(34,40)** zuströmen.
